# DEMANDE DE BREVET EUROPEEN

(11) **EP 4 586 544 A1**
(43) Date de publication de la demande: **16.07.2025**
(21) Numéro de dépôt: 24217545.3
(22) Date de dépôt: 04.12.2024
(51) Int. Cl.: H04L 9/08

(54) **PROCÉDÉ À SÉCURITÉ RENFORCÉE D'ÉTABLISSEMENT DE CONNEXION AVEC AUTHENTIFICATION PAR MOT DE PASSE**

(30) Priorité: 09.01.2024 FR 2400198
(71) Demandeur: Idemia France, 92400 Courbevoie (FR)
(72) Inventeur: FERAUD, Alban, 92400 COURBEVOIE (FR)
(74) Mandataire: Santarelli

(57) **Abrégé**

L'invention concerne un procédé d'établissement de connexion avec authentification par mot de passe entre une puce électronique (10) d'un support de données d'identification d'une personne et un terminal de contrôle (20). Ce procédé met en oeuvre, outre le chiffrement symétrique d'un nonce s à l'aide d'une clé de chiffrement symétrique, une transformation additionnelle au moyen d'une autre clé de chiffrement dérivée de données d'identification portées par le support de données d'identification de la personne.

## Description

### DOMAINE TECHNIQUE

**Le domaine de l'invention est celui de** l'établissement de connexion avec authentification par mot de passe entre une **puce électronique d'un support de données d'identification d'une personne et un terminal de contrôle. L'invention trouve notamment application à la réalisation d'un contrôle de la personne par** interaction du support de **données d'identification** avec le terminal de contrôle.

### TECHNIQUE ANTÉRIEURE

Une puce sans contact peut être protégée afin de refuser **l'accès à son contenu sauf** si un terminal de contrôle peut **prouver qu'il est autorisé à accéder** à la puce sans contact. Cette preuve est donnée via la présentation d'un mot de passe par le terminal. De sorte à assurer la confidentialité du mot de passe, cette présentation se fait par le truchement d'un protocole d'authentification ne dévoilant pas se dernier. En outre, la nature du mot de passe diffère en fonction du cas d'usage.

Dans le cas d'un document de voyage lisible à la machine (DVLM) électronique (DVLM-e), le mot de passe est constitué de données imprimées ou affichées sur le document, **notamment de données d'une** Zone de Lecture Automatique (ZLA ou MRZ en anglais pour « Machine Readable Zone ») du document ou **de données d'un** numéro **d'accès à la carte (CAN** pour « Card Access Number ») porté par le document. La présentation du mot de passe démontre que le document est présenté par son porteur et que le terminal de contrôle est habilité à le lire

Dans d'autres cas **d'usage,** un code PIN secret (de l'anglais « Personal Identification Number » désignant un numéro d'identification personnel) peut être utilisé afin de déverrouiller l'accès à des ressources de la puce (comme une clef de signature par exemple). Le porteur présente alors son code PIN au terminal de contrôle qui l'utilise pour accéder à la puce. L'utilisation du code PIN authentique garantit à la puce que le terminal agit pour le compte d'un porteur légitime.

Le document 9303 « Documents de voyage lisibles à la machine » **de l'OACl** (Organisation de l'Aviation Civile Internationale) spécifie en sa partie 11 des protocoles cryptographiques pour les DVLM-e avec accès à une puce sans contact. Ces protocoles visent notamment à empêcher la lecture non autorisée (écrémage) des données contenues dans la puce **sans contact et à empêcher l'interception illicite des communications entre** la puce sans contact et un terminal de contrôle.

**Deux mécanismes de contrôle d'accès à la puce** sont spécifiés :
- **le contrôle d'accès de base (BAC** pour « Basic Access Control »), purement fondé sur la cryptographie symétrique ; et
- **l'établissement de connexion avec authentification par mot de passe (PACE** pour « Password Authenticated Connection Establishment ») qui emploie la cryptographie asymétrique pour fournir des clés de session à plus grande entropie.

**PACE utilise des clés Kn calculées à partir de mots de passe avec une fonction de calcul de clé KDFπ. Les deux mots de passe suivants et les clés correspondantes sont** notamment disponibles :
- **ZLA : la clé Kπ définie par Kn = KDFπ(ZLA) est calculée à partir de la zone de** lecture **automatique (ZLA), c'est-**à-dire calculée à partir du numéro du document, de la date de **naissance et de la date d'expiration ;**
- **CAN : la clé Kπ définie par Kπ = KDFπ(CAN) est calculée à partir du numéro d'accès à** la carte (CAN). Le CAN est un numéro imprimé sur le document, choisi de façon aléatoire ou pseudo-aléatoire.

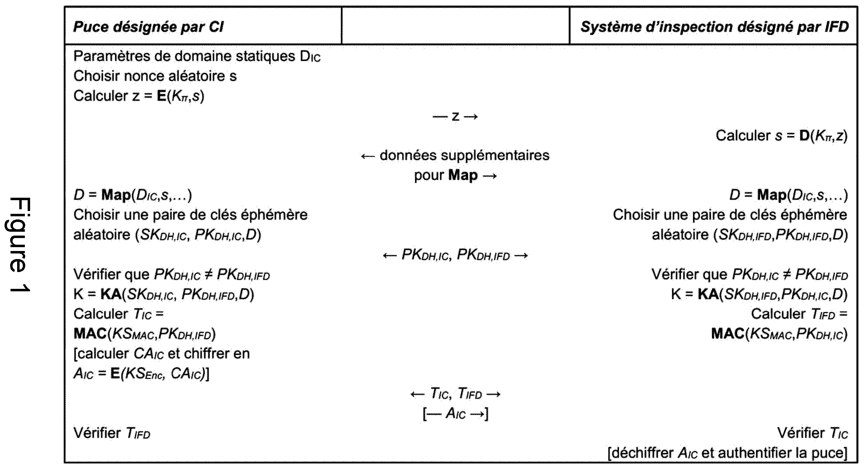

La figure 1 illustre les principales étapes du protocole PACE.

**Au cours d'une première étape, la puce du DVLM**-e (désignée par IC ou CI sur la figure 1) choisit un nonce s de manière aléatoire, chiffre le nonce pour obtenir z=**E(Kn,s), où Kπ=KDFπ (π) est calculée à partir du mot de passe partagé π** et où **E**(K, S) désigne le **chiffrement d'un texte en clair 5 avec une clé symétrique K. La puce du DVLM**-e envoie ensuite le nonce chiffré z au terminal de contrôle.

**Au cours d'une deuxième étape, le** terminal de contrôle (également dénommé **système d'inspection et désigné par IFD sur la** **figure 1****)** retrouve le nonce en clair s=**D(Kπ,z) à l'aide du mot de passe partagé π, D(K,C) désignant le déchiffrement d'un texte chiffré C** avec une clé symétrique K.

La puce du DVLM-e et le terminal de contrôle exécutent ensuite les étapes suivantes :
a) Ils échangent des données supplémentaires requises pour le mappage du nonce :
   i) pour un mappage dit générique, la puce du DVLM-e et le système **d'inspection échangent** des clés publiques éphémères ;
   ii) pour un mappage dit intégré, le système **d'inspection envoie un nonce** supplémentaire à la puce du DVLM-e.
b) Ils calculent des paramètres de domaine éphémères D = **Map**(D_{IC},s,...) à partir du nonce s, de paramètres de domaine statiques D_{IC} et des données supplémentaires de mappage évoquées plus haut.
c) Ils exécutent un agrément de clé Diffie-Hellman sur la base des paramètres de domaine éphémères D et de paires de clés asymétriques (SK_{DH,IC}, PK_{DH,IC}), (SK_{DH,IFD}, PK_{DH,IFD}) et génèrent le secret partagé K = **KA**(SK_{DH,IC}, PK_{DH,IFD}, D) = **KA**(SK_{DH,IFD}, PK_{DH,IC}, D).
d) Ils calculent des clés de session KS_{MAC} = **KDF**_{MAC}(K) et KS_{Enc} = **KDF**_{Enc}(K) **à l'aide du** secret partagé K ;
e) Ils échangent et vérifient un **jeton d'authentification** T_{IFD} = **MAC**(KS_{MAC}, PK_{DH,IC}) et T_{IC} = **MAC**(KS_{MAC}, PK_{DH,IFD})

À titre conditionnel, la puce du DVLM-e calcule des **données d'authentification de** puce CA_{IC}, les chiffre en A_{IC} = **E**(KS_{Enc}, CA_{IC}) et les envoie au **système d'inspection.** Le système **d'inspection** déchiffre A_{IC} et **vérifie l'authenticité de la puce en utilisant les données d'authentification de puce CA**_{IC} obtenues.

La sécurité du protocole PACE repose sur le secret des paramètres de domaine éphémères utilisés pour générer les clés de session.

Toutefois, **une analyse minutieuse des risques soulevés par l'informatique quantique** montre que la contribution de la cryptographie asymétrique aux paramètres de domaine éphémères pourrait ne plus rester secrète, car la cryptographie asymétrique serait brisée. Le seul secret résulterait du nonce généré par la puce du DVLM-e et partagé avec le terminal de contrôle, crypté à l'aide d'un algorithme symétrique avec une clé symétrique dérivée d'une entrée imprimée sur le document (CAN ou ZLA typiquement).

Cependant, cet algorithme symétrique est également menacé par l'avènement de l'ordinateur quantique. Grâce à l'algorithme de Graver par exemple, le nombre d'essais nécessaires pour effectuer une attaque par force brute sur une clé symétrique serait en effet divisé par deux, passant par exemple pour le standard de chiffrement AES (« Advanced Encryption Standard ») 128 bits de 2¹²⁸ essais à 2⁶⁴ essais.

### EXPOSÉ DE L'INVENTION

**L'invention a pour objectif d'augmenter la résistance du protocole PACE à des attaques menées par un ordinateur quantique. L'invention vise plus** particulièrement à apporter des solutions à cette problématique qui soient non seulement efficaces mais **également faciles à mettre en oeuvre dans le cadre du protocole existant pour pouvoir être** déployées à court terme.

**A cet effet, l'invention propose un procédé d'établissement de connexion avec** authentification par mot de passe entre un premier dispositif parmi une puce électronique **d'un support de données d'identification d'une personne et un terminal de contrôle et un** deuxième dispositif différent du premier dispositif parmi la puce électronique et le terminal **de contrôle, ledit établissement de connexion comprenant l'exécution d'un** agrément de clé Diffie-Hellman au moyen de paramètres de domaine statiques ou éphémères. Ladite **exécution comprend la mise en oeuvre des étapes suivantes par le premier dispositif :**
- **le chiffrement d'une première clé publique éphémère du premier dispositif au moyen d'une première clé de chiffrement symétrique dérivée des données d'identification** ; et
- la transmission au deuxième dispositif de la première clé publique éphémère chiffrée du premier dispositif.

Certains aspects préférés mais non limitatifs de ce procédé sont les suivants :
- il **comprend en outre la mise en oeuvre des étapes suivantes par le premier dispositif :**
   o **la réception d'une première clé publique éphémère du deuxième dispositif chiffrée au** moyen **d'une deuxième clé de chiffrement symétrique** identique à ou différente de la première clé de chiffrement symétrique; et
   o le déchiffrement, au moyen de la deuxième clé de chiffrement symétrique, de la première clé publique éphémère chiffrée du deuxième dispositif ;
- **il comprend en outre le calcul, par le premier dispositif, d'un secret partagé avec le** deuxième dispositif, le calcul du secret partagé étant réalisé au moyen des paramètres de domaine statiques ou éphémères, de la première clé publique éphémère du deuxième **dispositif et d'une première clé privée éphémère du** premier dispositif ;
- **l'agrément de clé Diffie**-Hellman est exécuté au moyen des paramètres de domaine **statiques, le premier dispositif réalise un mappage générique d'un nonce pour** déterminer les paramètres de domaine éphémères et le calcul du secret partagé est réalisé au cours **dudit mappage générique lors de l'exécution de l'agrément de clé** Diffie-Hellman au moyen des paramètres de domaine statiques, de la première clé publique éphémère du deuxième dispositif et de la première clé privée éphémère du premier dispositif ;
- **l'agrément de clé Diffie**-Hellman est exécuté au moyen des paramètres de domaine **éphémères, le premier dispositif réalise un mappage d'un nonce pour déterminer** les paramètres de domaine éphémères et le calcul du secret partagé est réalisé suite **audit mappage lors de l'exécution de l'agrément de clé Diffie**-Hellman au moyen des paramètres de domaine éphémères, de la première clé publique éphémère du deuxième dispositif et de la première clé privée éphémère du premier dispositif ;
- il comprend **en outre, par la puce électronique, le chiffrement d'un nonce** au moyen **d'une clé de chiffrement symétrique dérivée des données d'identification différente** de la première clé de chiffrement symétrique et la transmission du nonce chiffré au terminal de contrôle.

**Alternativement et/ou en complément, l'invention propose un procédé d'établissement de connexion avec authentification par mot de passe entre un premier dispositif parmi une puce électronique d'un support de données d'identification d'une** personne et un terminal de contrôle et un deuxième dispositif différent du premier dispositif parmi la puce électronique et le terminal de contrôle. Ce procédé comprend la **mise en oeuvre des étapes suivantes par le premier dispositif** :
- **utilisation d'une première clé de chiffrement symétrique dérivée des données d'identification** pour chiffrer un premier nonce avant transmission du premier nonce chiffré au deuxième dispositif ou pour déchiffrer un premier nonce après réception du premier nonce chiffré depuis le deuxième dispositif ;
- **utilisation d'une deuxième clé de chiffrement symétrique dérivée des données d'identification** pour chiffrer un deuxième nonce avant transmission du deuxième nonce chiffré au deuxième dispositif ou pour déchiffrer un deuxième nonce après réception du deuxième nonce chiffré depuis le deuxième dispositif ;
- détermination de **paramètres de domaine éphémères d'un agrément de clé Diffie-**Hellman au moyen de paramètres de domaine statiques, du premier nonce et du deuxième nonce.

Certains aspects préférés mais non limitatifs de ce procédé sont les suivants :
- la détermination des paramètres de domaine éphémères est réalisée au moyen **d'une fonction de mappage ayant pour paramètres les paramètres de domaine** statiques et une concaténation du premier nonce et du deuxième nonce ;
- le premier et le deuxième nonce ont une même taille de nonce et la détermination **des paramètres de domaine éphémères est réalisée au moyen d'une fonction de** mappage ayant pour paramètres les paramètres de domaine statiques et un troisième nonce résultant d'un **mélange du premier nonce et du deuxième nonce** ayant la même taille de nonce que le premier et le deuxième nonce.

**Alternativement et/ou en complément, l'invention propose un procédé d'établissement de connexion avec authentification par mot de passe entre un premier dispositif parmi une puce électronique d'un support de données d'identification d'une** personne et un terminal de contrôle et un deuxième dispositif différent du premier dispositif parmi la puce électronique et le terminal de contrôle. Ce procédé comprend la **détermination, par le premier dispositif, de paramètres de domaine éphémères d'un** agrément de clé Diffie-**Hellman à partir de paramètres de domaine statiques et d'un nonce transformé résultant d'une transformation d'un nonce exploitant une première clé de chiffrement symétrique dérivée des données d'identification.**

Certains aspects préférés mais non limitatifs de ce procédé sont les suivants :
- il comprend **en outre l'utilisation, par le premier dispositif, d'une deuxième clé de chiffrement symétrique dérivée des données d'identification** pour chiffrer le nonce et fournir un chiffré de nonce avant transmission du chiffré de nonce au deuxième dispositif ou pour, **après réception d'un chiffré de nonce depuis le deuxième** dispositif, déchiffrer le chiffré de nonce et obtenir le nonce ;
- il comprend en **outre l'utilisation, par le premier dispositif, d'une deuxième clé de chiffrement symétrique dérivée des données d'identification pour chiffrer le nonce** transformé et fournir un chiffré du nonce transformé avant transmission au deuxième dispositif du chiffré du nonce transformé ou pour déchiffrer un chiffré du nonce transformé après réception du chiffré du nonce transformé depuis le deuxième dispositif et obtenir le nonce transformé ;
- la transformation du nonce exploitant la première clé de chiffrement symétrique est réalisée par la puce électronique ;

Dans chacun de ces procédés, la première clé de chiffrement symétrique peut être **dérivée d'un premier sous-ensemble des données d'identification, la deuxième clé de** chiffrement symétrique peut être **dérivée d'un deuxième sous**-ensemble des données **d'identification, le premier sous**-ensemble et le deuxième sous-ensemble peuvent être différents, de préférence disjoints.

**Selon d'autres aspects, l'invention propose** un dispositif comprenant un processeur **configuré pour mettre en oeuvre l'un et/ou l'autre de ces différents** procédés et un produit **programme d'ordinateur comprenant des instructions qui, lorsqu'elles sont exécutées par un processeur, conduisent le processeur à mettre en oeuvre l'un et/ou l'autre des différents** procédés.

### BRÈVE DESCRIPTION DES DESSINS

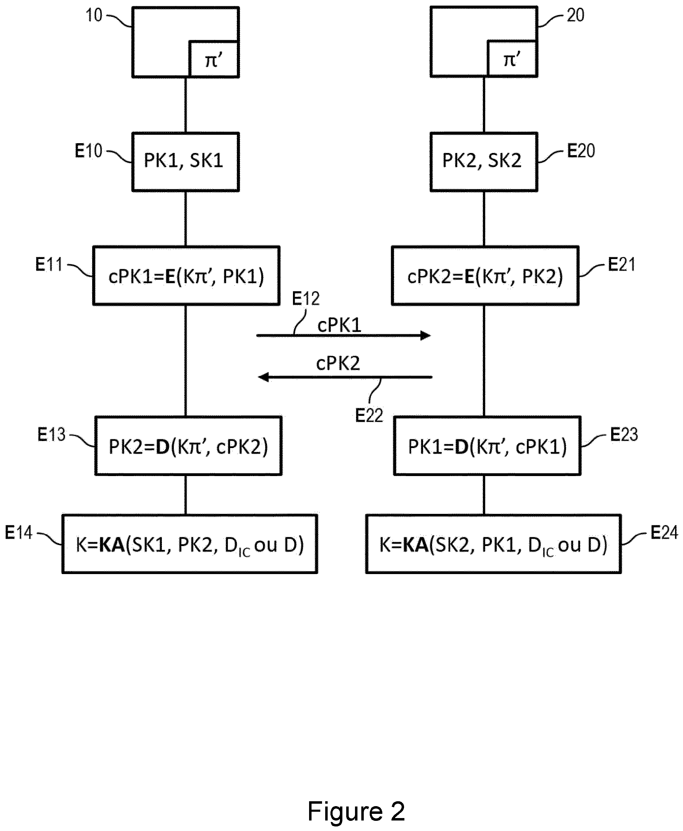

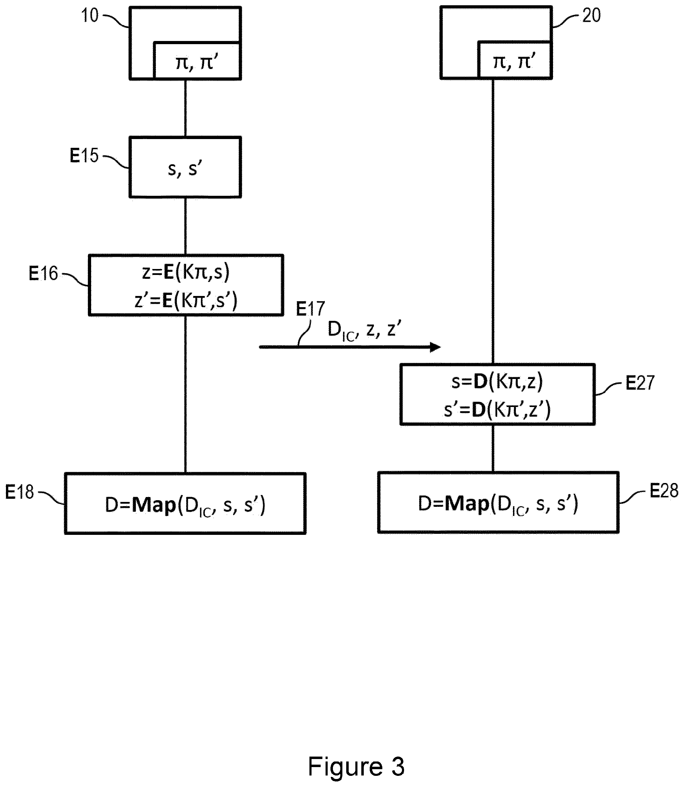

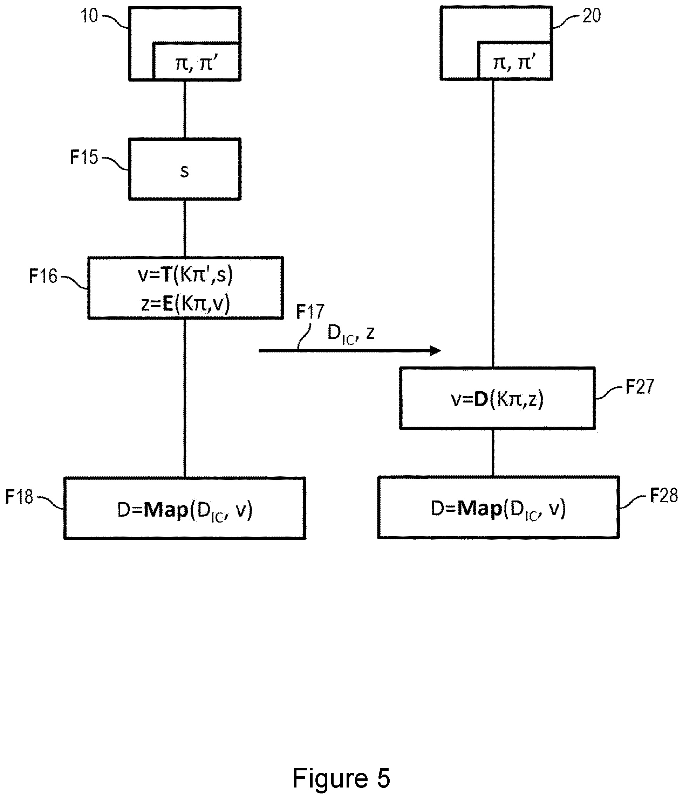

**D'autres aspects, buts, avantages et caractéristiques de l'invention apparaîtront** mieux à la lecture de la description détaillée suivante de formes de réalisation préférées de celle-ci, donnée à titre d'exemple non limitatif, et faite en référence aux dessins annexés sur lesquels :
- la figure 1, déjà présentée précédemment, illustre les principales étapes du protocole PACE ;
- **la** **figure 2** **illustre un premier procédé selon l'invention** réalisant un chiffrement **symétrique des clés publiques échangées lors d'un agrément de clé Diffie**-Hellman exécuté dans le cadre du protocole PACE;
- **la** **figure 3** **illustre un deuxième procédé selon l'invention exploitant deux nonces** pour générer les paramètres de domaine éphémères **utilisés lors d'un agrément de clé** Diffie-Hellman exécuté dans le cadre du protocole PACE;

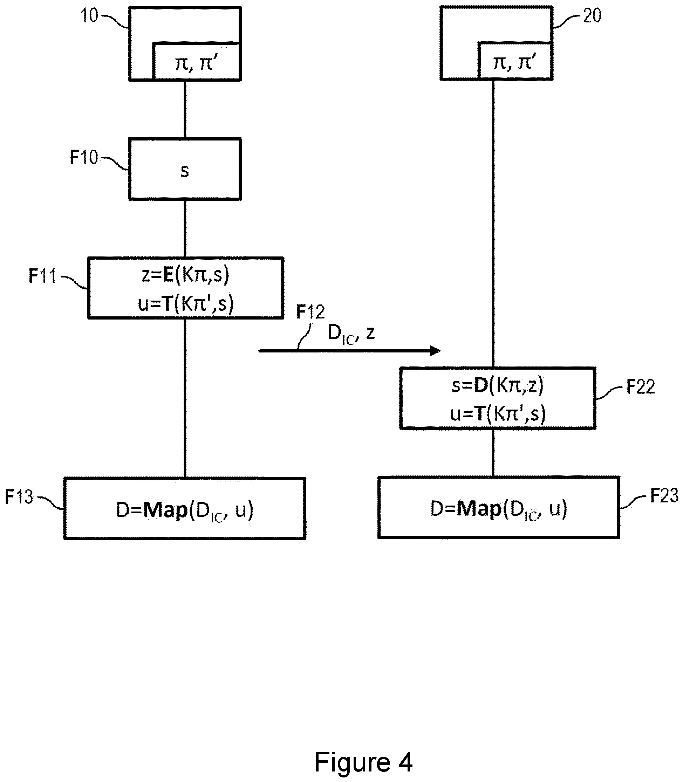

- la figure 4 illustre une première **variante d'un troisième procédé selon l'invention** réalisant un **mappage d'un nonce** transformé par une transformation exploitant une clé de chiffrement symétrique ;
- **la** **figure 5** **illustre une deuxième variante du troisième procédé selon l'invention réalisant un mappage d'un nonce** transformé par une transformation exploitant une clé de chiffrement symétrique.

### EXPOSÉ DÉTAILLÉ DE MODES DE RÉALISATION PARTICULIERS

**L'invention porte sur un procédé d'établissement de connexion avec authentification par mot de passe entre une puce électronique d'un support de données d'identification d'une personne et un terminal de contrôle,** le mot de passe étant dérivé des données **d'identification. L'invention trouve application à la réalisation d'un contrôle de la personne pour l'autoriser ou lui interdire l'accès à une zone ou à un service sécurisé,** par exemple **avant d'embarquer dans un avion ou avant de franchir** la frontière d'un pays ou encore **avant de lui autoriser l'accès à des ressources contenues dans la puce électronique (comme** par exemple une clé utilisée à des fins de signature électronique).

Selon une réalisation possible, le **support de données d'identification de la personne** est un document physique (tel qu'un passeport, un titre de séjour ou une carte d'identité, voire une carte à puce) **équipé d'une** puce électronique. **Les données d'identification sont** enregistrées dans la puce électronique du support. En outre, **les données d'identification** peuvent être imprimées sur le support ou affichées par celui-ci. Elles peuvent être lues optiquement par le terminal de contrôle ou alternativement être entrées manuellement dans le terminal de contrôle par un inspecteur ou par la personne elle-même. Ces données peuvent notamment correspondre à la ZTA ou au CAN mentionnés précédemment. Alternativement, elles peuvent correspondre à un code PIN enregistré dans la puce électronique, ce code PIN pouvant être saisi par la personne ou par un inspecteur dans le terminal de contrôle.

**Selon une autre réalisation possible, le support de données d'identification est un terminal de l'utilisateur, tel qu'un mobile multifonction ou une montre connectée, qui embarque un document d'identité dématérialisé. Le terminal de l'utilisateur peut être commandé pour afficher les données d'identification sur une interface du terminal de l'utilisateur, le terminal de** contrôle pouvant alors procéder à leur lecture optique.

On comprendra que quel que soit son format, le support **des données d'identification** de la personne comprend une puce électronique **et des données** d'identification que celles-ci soient affichées ou physiquement imprimées sur le support (par exemple sous la forme **d'un code barre),** ou encore enregistrées dans la puce.

Le terminal de contrôle comprend quant à lui un processeur, une interface de communication contact et/ou sans contact avec la puce électronique et potentiellement **un organe de lecture des données d'identification, par exemple un organe de lecture** optique et/ou une interface homme-machine.

Dans ce cadre, **l'invention apporte différentes solutions pour augmenter la résistance** du protocole PACE à des attaques quantiques. Ces différentes solutions peuvent être implémentées isolément ou au contraire en étant combinées entre elles dans toute forme de combinaison possible. Ces différentes solutions au même problème reposent sur le même concept consistant à modifier le protocole PACE pour y **mettre en oeuvre,** outre le **chiffrement symétrique du nonce s à l'aide de la clé de chiffrement Kπ,** une transformation additionnelle (par exemple un chiffrement) au **moyen d'une clé de chiffrement** symétrique **Kπ' dérivée de données d'identification portées par le support de données d'identification** de la personne. **On notera qu'un chiffrement symétrique présente l'avantage d'être plus robuste qu'un chiffrement asymétrique standard** aux attaques quantiques.

Les avantages de ces solutions sont les suivants. **Tout d'abord, le protocole** PACE est à peine modifié. **Ensuite, elles sont faciles à mettre en oeuvre. Enfin, elles constituent des mesures efficaces qui peuvent rapidement être mises en oeuvre, sans avoir à attendre la conception d'un nouveau protocole.**

Dans un mode de réalisation préférentiel, la clé **Kπ'** utilisée pour réaliser le chiffrement additionnel est **dérivée de données d'identification** portées par le support de **données d'identification de la personne** qui sont **différentes des données d'identification** (le mot de passe partagé **π** mentionné ci-dessus) utilisées pour dériver la clé symétrique **Kπ** utilisée pour réaliser le chiffrement/déchiffrement du nonce. **En d'autres termes, la première clé de chiffrement symétrique Kπ est dérivée d'un premier sous-**ensemble des **données d'identification** (i.e., **dérivée d'un premier** mot de passe qui correspond typiquement aux données de ce premier sous-ensemble **des données d'identification**), la **deuxième clé de chiffrement symétrique Kπ' est dérivée d'un deuxième sous**-ensemble des **données d'identification** (i.e., **dérivée d'un deuxième mot de passe qui correspond** typiquement aux données de ce deuxième sous-**ensemble des données d'identification),** le premier sous-ensemble et le deuxième sous-ensemble étant différents. Par différents, on entend ici que le premier sous-ensemble et le deuxième sous-ensemble peuvent présenter un recouvrement partiel. Dans une réalisation **préférentielle permettant** d'augmenter l'entropie des deux clés symétriques, le premier sous-ensemble et le deuxième sous-ensemble sont disjoints. **A titre d'exemple non limitatif,** si **Kπ = KDFπ(ZLA)** on peut par exemple prévoir **Kπ'** = **KDFπ**(CAN) (i.e., le mot de passe partagé pour cette seconde clé est le numéro CAN tandis que le mot de passe partagé pour la première clé est ZLA).

Dans ce qui suit, et en référence aux figures 2-5, **on considère que l'un parmi la** puce électronique 10 du **support de données d'identification** de la personne et le terminal de contrôle 20 **constitue un premier dispositif tandis que l'autre parmi** la puce électronique 10 et le terminal de contrôle 20 constitue un deuxième dispositif différent du premier dispositif.

### Protection des clés publiques

**Comme on l'a vu précédemment, l'établissement de connexion selon PACE comprend l'exécution d'un agrément de clé Diffie**-Hellman au moyen de paramètres de domaine statiques D_{IC} ou éphémères D. Notamment, un agrément de clé Diffie-Hellman est exécuté au moyen des paramètres de domaine statiques D_{IC} **lorsqu'un mappage générique du nonce est mis en oeuvre. Par ailleurs, on retrouve toujours l'exécution d'un agrément** de clé Diffie-Hellman au moyen des paramètres de domaine éphémères D pour calculer le secret partagé K **permettant d'élaborer les clés de session** KS_{MAC} et KS_{Enc}.

L'exécution **d'un tel agrément de clé Diffie**-Hellman fait suite au chiffrement par la puce électronique 10 **d'un nonce** s **au moyen d'une clé de chiffrement symétrique Kπ dérivée des données d'identification, à la transmission du nonce chiffré au terminal de** contrôle 20 et au déchiffrement du nonce chiffré par le terminal de contrôle.

Comme représenté sur la figure 2, **l'exécution d'un tel agrément** de clé Diffie-Hellman comprend la génération, par chacun le premier dispositif 10 ou **20 d'une paire de clés** éphémères asymétriques (PK1, SK1) ou **(PK2, SK2) lors d'**une étape E10 ou E20, la paire comprenant une clé publique PK1 ou PK2 et une clé privée SK1 ou SK2. **L'exécution de cet** agrément comprend par ailleurs la transmission par chacun du premier et du deuxième **dispositif à destination de l'autre** dispositif de la clé publique éphémère PK1, PK2 de sa paire de clés asymétriques. **En reprenant l'exemple de la** **figure 1** **où est illustré l'exécution** d'un agrément de clé Diffie-Hellman au moyen des paramètres de domaine éphémères D, les clés publiques éphémères PK_{DH,IC} et PK_{DH,IFD} sont ainsi échangées.

**Une première solution proposée par l'invention consiste à venir chiffrer ces clés** publiques **éphémères au moyen d'une clé de chiffrement symétrique Kπ'** dérivée des **données d'identification. Un** premier procédé selon **l'invention comprend alors la mise en oeuvre des étapes suivantes par** chacun du premier et du deuxième dispositif lors de **l'exécution d'un** agrément de clé Diffie-Hellman au moyen des paramètres de domaine statiques ou éphémères : le chiffrement **lors d'une étape** E11, E22 de sa clé publique éphémère PK1, PK2 au moyen d'une clé de chiffrement symétrique dérivée des données **d'identification Kπ' et la** transmission **lors d'une étape E12,** E22 **à l'autre** dispositif de sa clé publique éphémère chiffrée cPK1=**E(Kπ', PK1)**, cPK2=**E(Kπ', PK2)**. De manière optionnelle, ce chiffrement peut aussi inclure une protection en intégrité et authenticité (par exemple grâce à AES utilisé avec le mode de fonctionnement GCM pour « Galois/Counter Mode »).

Ce procédé peut en outre comprendre **la mise en oeuvre des étapes suivantes par** chacun du premier et deuxième dispositif : la réception de la clé publique éphémère de **l'autre** dispositif chiffrée au moyen de ladite clé de chiffrement symétrique cPK2=**E(Kπ',** PK2), cPK1=**E(Kπ',** PK1) et le déchiffrement **lors d'une étape E13,** E23, au moyen de ladite clé de chiffrement symétrique **Kπ',** de la clé publique éphémère chiffrée **de l'autre** dispositif PK2=**D(Kπ', cPK2)**, PK1= **D(Kπ', cPK1)..** De manière optionnelle, les dispositifs 10 et 20, lors du déchiffrement des clefs publiques cPK2 et cPK1 au cours des étapes E13 et E23, peuvent aussi vérifier leur intégrité et authenticité.

Ce procédé est complété par le calcul, par chacun du premier et du deuxième **dispositif, d'un secret partagé** K avec **l'autre** dispositif **lors d'une étape E14,** E24. Le calcul du secret partagé K est réalisé au moyen des paramètres de domaine statiques D_{IC} ou éphémères D, de la clé publique éphémère PK2, PK1 de **l'autre** dispositif et de sa clé privée éphémère SK1, SK2 selon K = **KA**(SK1, PK2, Dic ou D) ou K = **KA**(SK2, PK1, Dic ou D).

Considérant que **l'agrément de clé Diffie**-Hellman ici visé est celui exécuté au moyen des paramètres de domaine statiques D_{IC}, chacun du premier et du deuxième dispositif réalise un mappage générique du nonce s. Le calcul du secret partagé par chacun du premier et du deuxième dispositif est alors réalisé au cours dudit mappage générique lors **de l'exécution de l'agrément de clé Diffie**-Hellman au moyen des paramètres de domaine statiques D_{IC}, de la clé publique éphémère PK2, **PK1 de l'autre** dispositif et de sa clé privée éphémère SK1, SK2. Chaque dispositif, après avoir obtenu le secret partagé, le combine **ensuite avec le nonce s afin d'obtenir les** paramètres de domaine éphémères D.

Alternativement, considérant que **l'agrément de clé Diffie**-Hellman ici visé est celui exécuté au moyen des paramètres de domaine éphémères D, chacun du premier et du deuxième dispositif réalise un mappage du nonce s pour déterminer les paramètres de domaine éphémères. Le calcul du secret partagé par chacun du premier et du deuxième dispositif est alors **réalisé suite audit mappage lors de l'exécution de l'agrément de clé** Diffie-Hellman au moyen des paramètres de domaine éphémères D, de la clé publique éphémère PK2, **PK1 de l'autre** dispositif et de sa clé privée éphémère SK1, SK2.

Dans une réalisation possible, chacun des agréments de clé Diffie-Helman (celui du mappage générique du nonce avec les paramètres de domaine statiques et celui permettant la génération des clés de session avec les paramètres de domaine éphémères) **met en oeuvre un chiffrement symétrique des clés publiques échangées** entre le premier et le **deuxième dispositif. Le procédé comporte alors, outre le chiffrement d'une** première clé **publique éphémère du premier dispositif au moyen d'une** première clé de chiffrement symétrique dérivée des données **d'identification** et sa transmission au deuxième dispositif (lors du premier agrément), **le chiffrement d'une deuxième clé publique éphémère du premier dispositif au moyen d'une deuxième clé de chiffrement symétrique dérivée des données d'identification** et sa transmission au deuxième dispositif (lors du deuxième agrément).

Dans ce qui précède, chacun des premier et deuxième dispositif exploite la même clé **de chiffrement symétrique Kπ' pour procéder au chiffrement de sa clé publique PK1, PK2. L'invention n'est toutefois pas limitée à cet exemple de réalisation, mais s'étend en réalité à l'exploitation** de multiples clefs de chiffrement symétriques dérivées des données **d'identification** pour le chiffrement de ces clefs publiques PK1, PK2, permettant par **exemple d'utiliser une clef de chiffrement symétrique par clef publique** (i.e., une première clé de chiffrement symétrique pour chiffer/déchiffrer la clé publique du premier dispositif et une deuxième clé de chiffrement symétrique pour chiffrer/déchiffrer la clé publique du deuxième dispositif).

Ainsi, dans une première variante de réalisation, un même sous-ensemble des **données d'identification π'** peut être utilisé pour dériver, au moyen de deux fonctions de calcul de clé différentes, une première clé de chiffrement symétrique **Kπ'** et une deuxième clé de chiffrement symétrique K'**π'**. **La première clé de chiffrement symétrique Kn'** est utilisée pour chiffrer/déchiffrer la clé publique PK1 de la puce électronique 10 (qui peut être le premier ou le deuxième dispositif) et la deuxième clé de chiffrement symétrique **K'π'** est utilisée pour chiffrer/déchiffrer la clé publique PK2 du terminal de contrôle 20 (qui peut être le deuxième ou le premier dispositif). Dans cette variante, on a donc cPK1=**E(Kπ',** PK1), PK1= **D(Kπ', cPK1), cPK2=E(K'π', PK2) et PK2= D(K'π', cPK2).**

Dans une deuxième variante de réalisation, des sous-ensembles des données **d'identification différents π', π" sont utilisés pour dériver respectivement une première clé** de chiffrement symétrique **Kπ'** et une deuxième clé de chiffrement symétrique **Kπ". La** première clé de chiffrement symétrique **Kπ'** est utilisée pour chiffrer/déchiffrer la clé publique PK1 de la puce électronique 10 (qui peut être le premier ou le deuxième dispositif) et la deuxième clé de chiffrement symétrique **Kπ" est** utilisée pour chiffrer/déchiffrer la clé publique PK2 du terminal de contrôle (qui peut être le deuxième ou le premier dispositif). Dans cette variante, on a donc cPK1=**E(Kπ', PK1), PK1= D(Kπ', cPK1), cPK2=E(Kπ", PK2) et** PK2= **D(Kπ", cPK2).**

Ces deux variantes peuvent bien entendu être combinées en venant utiliser à la fois deux fonctions de calcul de clé différentes et deux sous-ensembles différents des données **d'identification pour dériver des clés Kπ' et K'π".**

Comme indiqué précédemment, de manière préférentielle la ou les clés de **chiffrement symétrique Kπ', K'π', Kπ" et K'π" utilisée(s) pour chiffrer les clés publiques PK1, PK2 est (sont) dérivée(s) d'un premier sous-ensemble des données d'identification, la clé de chiffrement symétrique Kπ utilisé pour chiffrer le nonce est dérivée d'un deuxième sous-ensemble des données d'identification, le premier sous**-ensemble et le deuxième sous-ensemble étant différents, de préférence disjoints.

### Protection du nonce

La confidentialité du nonce s qui est utilisé pour générer les paramètres de domaine **éphémères D est mise à mal par l'algorithme de Grover,** grâce auquel un attaquant peut casser la seule clé symétrique **Kπ de chiffrement/déchiffrement** du nonce s et donc retrouver le nonce. **Un deuxième procédé proposé par l'invention** permet de renforcer la sécurité en utilisant une deuxième clé symétrique **Kπ'** également dérivée des données **d'identification** pour chiffrer/déchiffrer un deuxième nonce **s'.** Les deux nonces peuvent par ailleurs être utilisés pour générer les paramètres de domaine éphémères D.

En référence à la figure 3, ce deuxième procédé **comprend lors d'une étape E15 le** tirage aléatoire de deux nonces s, s' **par la puce électronique.**

Ce procédé comprend par ailleurs **la mise en oeuvre des étapes suivantes par le** premier dispositif 10 ou 20 :
- **utilisation d'une première clé de chiffrement symétrique Kπ dérivée des données d'identification** pour chiffrer **lors d'une étape E16** (lorsque le premier dispositif est la puce électronique, référencée 10 sur la figure 3) le premier nonce s avant transmission **lors d'une étape E17** du premier nonce chiffré z=**E(Kπ,s)** au deuxième dispositif 20 ou pour déchiffrer **lors d'une étape E27** (lorsque le premier dispositif est le terminal de contrôle, référencée 20 sur la figure 3) le premier nonce s=**D(Kπ,z)** après réception **lors d'une étape** E17 du premier nonce chiffré z depuis le deuxième dispositif ;
- **utilisation d'une deuxième clé de chiffrement symétrique Kπ' dérivée des données d'identification** pour chiffrer **lors de l'étape E16** (lorsque le premier dispositif est la puce électronique 10) le **deuxième nonce** s' avant transmission du deuxième nonce **chiffré z'** =**E(Kπ',s')** au deuxième dispositif ou pour déchiffrer **lors de l'étape E27** (lorsque le premier dispositif est le terminal de contrôle 20) le deuxième nonce **s'=D(Kπ',z')** après réception **lors de l'étape** E17 **du deuxième nonce chiffré z' depuis** le deuxième dispositif ;
- détermination **lors d'une étape E18** (lorsque le premier dispositif est la puce électronique 10) ou lors **d'une** étape E28 (lorsque le premier dispositif est le terminal de contrôle 20) **de paramètres de domaine éphémères D d'un agrément** de clé Diffie-Hellman au moyen de paramètres de domaine statiques D_{IC}, du premier **nonce s et du deuxième nonce s'.**

**On notera que l'étape E17** peut comprendre en outre la transmission des paramètres de domaine statiques D_{IC} de la puce électronique vers le terminal de contrôle. Toutefois, ces derniers peuvent être transmis dans une étape préalable à la réalisation de ce protocole.

Dans une réalisation possible, la détermination des paramètres de domaine **éphémères est réalisée au moyen d'une fonction de mappage,** possiblement similaire à **celui mis en oeuvre pour le mappage générique,** ayant pour paramètres les paramètres de domaine statiques D_{IC} et une concaténation du premier nonce s et du deuxième nonce s'.

Dans une autre réalisation possible **permettant d'utiliser la fonction de mappage** spécifiée dans le protocole PACE, sans modification, le premier et le deuxième nonce ont une même taille de nonce et la détermination des paramètres de domaine éphémères est **réalisée au moyen d'une fonction de mappage, possiblement similaire à celui mis en oeuvre** pour le mappage générique ou intégré, ayant pour paramètres les paramètres de domaine **statiques et un troisième nonce résultant d'un mélange du premier nonce et du deuxième** nonce ayant la même taille de nonce que le premier et le deuxième nonce. Le mélange de deux nonces correspond par exemple à une somme, à un ou exclusif XOR ou à une multiplication (et réduction modulaire) des deux nonces, ou bien à un hachage de la concaténation des deux nonces.

Comme indiqué précédemment, ici aussi de manière préférentielle la première clé **de chiffrement symétrique Kπ est dérivée d'un premier sous**-ensemble des données **d'identification, la deuxième clé de chiffrement symétrique Kπ'** est **dérivée d'un deuxième** sous-**ensemble des données d'identification, le premier sous-**ensemble et le deuxième sous-ensemble étant différents, de préférence disjoints.

### Protection du calcul des paramètres de domaine éphémères

En référence aux figures 4 et 5, **selon un troisième procédé proposé par l'invention,** le premier dispositif 10 ou 20 réalise la détermination **lors d'une étape F13, F18 ou F23, F28 de paramètres de domaine éphémères d'un agrément de clé Diffie**-Hellman à partir de paramètres de domaine statiques D_{IC} **et d'un** nonce transformé u, v **résultant d'une transformation d'un nonce s réalisée au moyen d'**une première clé de chiffrement symétrique **Kπ' dérivée des données d'identification.** La transformation du nonce s peut être un chiffrement du nonce au moyen de la première clé de chiffrement symétrique **Kπ'**. Dans un autre exemple, la transformation du nonce correspond à un mélange du nonce s avec la première clé de chiffrement symétrique **Kπ'** par une somme, par un ou exclusif XOR ou par une multiplication (et réduction modulaire). Dans encore un autre exemple, la transformation du nonce s peut être un hachage de la concaténation du nonce avec la première clé de chiffrement symétrique **Kπ'**.

La figure 4 illustre un premier mode de réalisation possible de ce troisième procédé qui fait suite à la réalisation par la puce électronique 10 **du tirage d'une nonce s lors d'une** étape F10. Il comprend **la mise en oeuvre** des étapes suivantes par le premier dispositif 10 ou 20 :
- utilisation, lorsque le premier dispositif est la puce électronique 10, de la première clé de chiffrement symétrique **Kπ' dérivée des données d'identification lors d'une** étape F11 pour transformer le nonce et fournir un nonce transformé u=**T(Kπ',s)** ;
- **utilisation d'une deuxième clé de chiffrement symétrique Kπ dérivée des données d'identification pour chiffrer le nonce s lors de l'étape E11 (lorsque le premier** dispositif est la puce électronique 10) et fournir un chiffré de nonce z=**E(Kπ,s) avant transmission lors d'une étape F12 du chiffré de nonce au deuxième dispositif ou** (lorsque le premier dispositif est le terminal de contrôle 20) pour, après réception **d'un chiffré de nonce z depuis le deuxième dispositif, déchiffrer lors d'une étape** F22 le chiffré de nonce z et obtenir le nonce s= **D(Kπ,z).** La transmission lors de **l'étape F12 du chiffré de nonce z peut être accompagnée de la transmission des** paramètres de domaine statiques D_{IC} au terminal de contrôle. Toutefois, les paramètres de domaine statiques peuvent être transmis dans une étape préalable à la réalisation de ce protocole ;
- utilisation, lorsque le premier dispositif est le terminal de contrôle 20, lors de **l'étape F22** de la première clé de chiffrement symétrique **Kπ' dérivée des données d'identification** pour transformer le nonce et fournir le nonce transformé u=**T(Kπ',s)** ;
- **détermination des paramètres de domaine éphémères D lors d'une étape F13 ou** F23 à partir des paramètres de domaine statiques D_{IC} et du nonce transformé u.

La figure 5 illustre un deuxième mode de réalisation possible de ce troisième procédé qui fait également suite à la réalisation par la puce électronique 10 **du tirage d'une nonce s lors d'une étape F15. Il comprend la mise en oeuvre des étapes suivantes par le premier** dispositif 10 ou 20 :
- utilisation, lorsque le premier dispositif est la puce électronique 10, de la première clé de chiffrement symétrique **Kπ' dérivée des données d'identification** lors **d'une** étape F16 pour transformer le nonce et fournir un nonce transformé v=**T(Kπ',s)** ;
- **utilisation d'une deuxième clé de chiffrement symétrique Kπ dérivée des données d'identification** pour chiffrer le nonce transformé **lors de l'étape** F16 (lorsque le premier dispositif est la puce électronique 10) et fournir un chiffré de nonce transformé z=**E(Kπ,v) avant transmission lors d'une étape** F17 du chiffré de nonce transformé au deuxième dispositif ou (lorsque le premier dispositif est le terminal de contrôle 20) **pour, après réception d'un chiffré de nonce** transformé z depuis le **deuxième dispositif, déchiffrer lors d'une étape** F27 le chiffré de nonce transformé z et obtenir le nonce transformé v=**D(Kπ,z)**. **La transmission lors de l'étape** F17 du chiffré de nonce transformé z peut être accompagnée de la transmission des paramètres de domaine statiques D_{IC} au terminal de contrôle. Toutefois, les paramètres de domaine statiques peuvent être transmis dans une étape préalable à la réalisation de ce protocole ;
- **détermination des paramètres de domaine éphémères D lors d'une étape** F18 ou F28 à partir des paramètres de domaine statiques D_{IC} et du nonce transformé v.

Comme pour les autres procédés décrits précédemment, de manière préférentielle **la première clé de chiffrement symétrique Kπ' est dérivée d'un premier sous**-ensemble des **données d'identification, la deuxième clé de chiffrement symétrique Kπ est dérivée d'un** deuxième sous-**ensemble des données d'identification**, **le premier sous**-ensemble et le deuxième sous-ensemble étant différents, de préférence disjoints.

**L'invention n'est pas limitée aux procédés précédemment décrits mais s'étend** également à un dispositif (par exemple un puce électronique ou un terminal de contrôle) **comprenant un processeur configuré pour mettre en oeuvre les étapes de l'un et/ou l'autre** de ces différents procédés. **L'invention vise également un produit programme d'ordinateur comprenant des instructions qui, lorsqu'elles sont exécutées par un processeur, conduisent** le **processeur à mettre en oeuvre les étapes de l'un et/ou l'autre des différents** procédés **ainsi qu'un support de données lisible par ordinateur sur lequel est enregistré un tel produit programme d'ordinateur.**

## Revendications

1. **Procédé d'établissement de** connexion avec authentification par mot de passe entre un premier dispositif parmi une puce électronique (10) **d'un support de données d'identification d'une personne et un terminal de contrôle** (20) et un deuxième dispositif différent du premier dispositif parmi la puce électronique (10) et le terminal de contrôle (20), ledit établissement de connexion **comprenant l'exécution d'un agrément de clé Diffie-**Hellman au moyen de paramètres de domaine statiques (D_{IC}) ou éphémères (D), ladite **exécution comprenant la mise en oeuvre des étapes suivantes par** le premier dispositif :
- le chiffrement (E11, E21) **d'une** première clé publique éphémère (PK1, PK2) du premier dispositif au moyen **d'une** première clé de chiffrement symétrique **(Kπ') dérivée des données d'identification ;** et
- la transmission (E12, E22) au deuxième dispositif de la première clé publique éphémère chiffrée du premier dispositif (cPK1, cPK2).

2. Procédé selon la revendication 1, **comprenant en outre la mise en oeuvre des étapes** suivantes par le premier dispositif :
- la réception (E22, E12) d'une première clé publique éphémère du deuxième dispositif chiffrée (cPK2, cPK1) au moyen **d'une deuxième** clé de chiffrement symétrique identique à ou différente de la première clé de chiffrement symétrique; et
- le déchiffrement (E13, E23), au moyen de la deuxième clé de chiffrement symétrique, de la première clé publique éphémère chiffrée du deuxième dispositif.

3. Procédé selon la revendication 2, comprenant en outre le calcul (E14, E24), par le premier dispositif, **d'un secret partagé** (K) avec le deuxième dispositif, le calcul du secret partagé étant réalisé au moyen des paramètres de domaine statiques (D_{IC}) ou éphémères (D), de la première clé publique éphémère (PK2, PK1) du deuxième **dispositif et d'une** première clé privée éphémère (SK1, SK2) du premier dispositif.

4. Procédé selon la revendication 3, dans lequel **l'agrément de clé Diffie**-Hellman est exécuté au moyen des paramètres de domaine statiques (Dic), dans lequel le premier dispositif réalise **un mappage générique d'un nonce pour déterminer les paramètres de** domaine éphémères (D) et dans lequel le calcul du secret partagé est réalisé au cours dudit mappage générique **lors de l'exécution de l'agrément de clé Diffie-**Hellman au moyen des paramètres de domaine statiques (D_{IC}), de la première clé publique éphémère (PK2, PK1) du deuxième dispositif et de la première clé privée éphémère (SK1, SK2) du premier dispositif.

5. Procédé selon la revendication 3, dans lequel **l'agrément de clé Diffie-**Hellman est exécuté au moyen des paramètres de domaine éphémères (D), dans lequel le premier **dispositif réalise un mappage d'un nonce pour déterminer les paramètres de domaine** éphémères (D) et dans lequel le calcul du secret partagé est réalisé suite audit mappage **lors de l'exécution de l'agrément de clé Diffie**-Hellman au moyen des paramètres de domaine éphémères (D), de la première clé publique éphémère (PK2, PK1) du deuxième dispositif et de la première clé privée éphémère (SK1, SK1) du premier dispositif.

6. Procédé selon la revendication 1, comprenant en outre, par la puce électronique (10), **le chiffrement d'un nonce au moyen d'une clé de chiffrement symétrique (Kπ) dérivée des données d'identification** différente de la première clé de chiffrement symétrique et la transmission du nonce chiffré au terminal de contrôle (20) .

7. **Procédé d'établissement de connexion avec authentification par mot de passe entre** un premier dispositif parmi une puce électronique (10) **d'un support de données d'identification d'une personne et un terminal de contrôle** (20) et un deuxième dispositif différent du premier dispositif parmi la puce électronique (10) et le terminal de contrôle (20), **ledit procédé comprenant la mise en oeuvre des étapes suivantes par le premier** dispositif :
- **utilisation d'une première clé de chiffrement symétrique (Kπ)** dérivée des données **d'identification** pourchiffrer (E16) un premier nonce (s) avant transmission (E17) du premier nonce chiffré (z) au deuxième dispositif ou pour déchiffrer (E27) un premier nonce (s) après réception du premier nonce chiffré (z) depuis le deuxième dispositif ;
- **utilisation d'une deuxième clé de chiffrement symétrique (Kπ')** dérivée des données **d'identification** pour chiffrer (E16) un deuxième nonce **(s')** avant transmission (E17) du deuxième nonce chiffré **(z')** au deuxième dispositif ou pour déchiffrer (E27) un deuxième nonce **(s')** après réception du deuxième nonce chiffré **(z')** depuis le deuxième dispositif;
- détermination (E18, E28) de paramètres de domaine éphémères (D) **d'un agrément** de clé Diffie-Hellman au moyen de paramètres de domaine statiques (D_{IC}), du premier nonce (s) et du deuxième nonce **(s').**

8. Procédé selon la revendication 7, dans lequel la détermination (E18, E28) des **paramètres de domaine éphémères est réalisée au moyen d'une fonction de mappage** ayant pour paramètres les paramètres de domaine statiques et une concaténation du premier nonce et du deuxième nonce.

9. Procédé selon la revendication 7, dans lequel le premier et le deuxième nonce ont une même taille de nonce et dans lequel la détermination (E18, E28) des paramètres de **domaine éphémères est réalisée au moyen d'une fonction de mappage ayant pour paramètres les paramètres de domaine statiques et un troisième nonce résultant d'un** mélange du premier nonce et du deuxième nonce ayant la même taille de nonce que le premier et le deuxième nonce.

10. **Procédé d'établissement de connexion avec authentification par mot de passe entre** un premier dispositif parmi une puce électronique (10) **d'un support de données d'identification d'une personne et un terminal de contrôle** (20) et un deuxième dispositif différent du premier dispositif parmi la puce électronique (10) et le terminal de contrôle (20), ledit procédé comprenant la détermination (F13, F18), par le premier dispositif, de **paramètres de domaine éphémères d'un agrément de clé Diffie**-Hellman à partir de paramètres de domaine statiques (D_{IC}) **et d'un nonce** transformé (u, v) résultant **d'une** transformation **d'un nonce** (s) exploitant une première clé de chiffrement symétrique **(Kπ') dérivée des données d'identification.**

11. Procédé selon la revendication 11, comprenant en outre **l'utilisation, par le premier dispositif, d'une deuxième clé de chiffrement symétrique (Kπ)** dérivée des données **d'identification** pour chiffrer (F11) le nonce (s) et fournir un chiffré de nonce (z) avant transmission (F12) du chiffré de nonce au deuxième dispositif ou pour, **après réception d'un** chiffré de nonce depuis le deuxième dispositif, déchiffrer (F22) le chiffré de nonce et obtenir le nonce (s).

12. Procédé selon la revendication 11, **comprenant en outre l'utilisation, par le premier dispositif, d'une deuxième clé de chiffrement symétrique (Kπ)** dérivée des données **d'identification** pour chiffrer (F16) le nonce transformé et fournir un chiffré du nonce transformé (z) avant transmission (F17) au deuxième dispositif du chiffré du nonce transformé ou pour déchiffrer (F27) un chiffré du nonce transformé après réception du chiffré du nonce transformé depuis le deuxième dispositif et obtenir le nonce transformé (v).

13. Procédé selon **l'une des** revendications 10 à 12, dans lequel la transformation du nonce exploitant la première clé de chiffrement symétrique **(Kπ')** est réalisée par la puce électronique (10).

14. Procédé selon **l'une des** revendications 6-9 et 11-13, dans lequel la première clé de **chiffrement symétrique est dérivée d'un premier sous**-ensemble des données **d'identification, la deuxième clé de chiffrement symétrique est dérivée d'un deuxième** sous-**ensemble des données d'identification, le premier sous**-ensemble et le deuxième sous-ensemble étant différents, de préférence disjoints.

15. Dispositif (10, 20) **comprenant un processeur configuré pour mettre en oeuvre les étapes du procédé selon l'une des revendications 1 à 14.**

16. **Produit programme d'ordinateur comprenant des instructions qui, lorsqu'elles sont** exécutées par un processeur, conduisent le processeur à mettre en **oeuvre les étapes du procédé selon l'une des revendications 1 à** 14.
